# EUROPÄISCHE PATENTSCHRIFT

(11) **EP 2 818 353 B1**
(45) Veröffentlichungstag und Bekanntmachung des Hinweises auf die Patenterteilung: **16.08.2017**
(21) Anmeldenummer: 14162327.2
(22) Anmeldetag: 28.03.2014
(51) Int. Cl.: B60K 37/06, G06F 3/01, G06F 3/0488

(54) **Bedienvorrichtung in einem Fahrzeug und Verfahren zum Bedienen von Funktionseinrichtungen eines Fahrzeugs**
Control apparatus in a vehicle and method for operating function devices of a vehicle
Dispositif de commande dans un véhicule et procédé de commande de dispositifs de fonctionnement d'un véhicule

(30) Priorität: 20.06.2013 DE 102013211694
(43) Veröffentlichungstag der Anmeldung: 31.12.2014
(73) Patentinhaber: Volkswagen Aktiengesellschaft, 38440 Wolfsburg (DE)
(72) Erfinder: Defoort, Simon, 38114 Braunschweig (DE)

(56) Entgegenhaltungen:
- DE-A1-102005 003 548

## Beschreibung

Die vorliegende Erfindung betrifft eine Bedienvorrichtung in einem Fahrzeug, die eine Anzeigevorrichtung und ein längliches kapazitives Bedienelement umfasst. Des weiteren weist die Bedienvorrichtung eine Steuervorrichtung auf, die mit der Anzeigevorrichtung und dem länglichen kapazitiven Bedienelement gekoppelt ist. Ferner betrifft die Erfindung ein Fahrzeug mit einer solchen Bedienvorrichtung und ein Verfahren zum Bedienen von Funktionseinrichtungen eines Fahrzeugs.

Mit einer Bedienvorrichtung in einem Fahrzeug muss eine Vielzahl von Funktionseinrichtungen des Fahrzeugs bedient werden. Durch Bedienvorgänge, die mittels der Bedienvorrichtung ausgeführt werden, ist es zum einen erforderlich verschiedene Informationen zur Anzeige auf der Anzeigevorrichtung zu bringen. Zu diesen Informationen zählen betriebsbezogene Daten des Fahrzeugs, Anzeigen eines Navigationssystems oder Telekommunikationssystems sowie Anzeigen der Infotainmenteinrichtungen des Fahrzeugs. Zum anderen ist es erforderlich, dass die verschiedenen Funktionseinrichtungen des Fahrzeugs bedient werden. Durch die Bedienvorgänge können Einstellungen von Einrichtungen des Fahrzeugs verändert werden, Eingaben des Navigationssystems getätigt werden sowie Eingaben für ein Telekommunikationssystem oder ein Infotainmentsystem getätigt werden.

Da es bei der Vielzahl von Funktionseinrichtungen in einem Fahrzeug häufig nicht mehr möglich ist, für jede Funktionseinrichtung einzelne mechanische Bedienelemente vorzusehen, weisen moderne Fahrzeuge Bedienvorrichtungen auf, bei denen durch wenige Bedienelemente eine Vielzahl von Bedienmenüs zur Anzeige auf der Anzeigevorrichtung gebracht werden können. Es wird beispielsweise ein Multifunktionsbediensystem eingesetzt, welches mehrere Multifunktionsanzeigen und Bedienelemente umfasst, mit denen die vielfältigen im Fahrzeug enthaltenen Funktionseinrichtungen bedient und gesteuert werden können. Die Bedienung wird dabei durch die auf der Multifunktionsanzeige wiedergegebene Information unterstützt bzw. geführt. Ferner kann über das Multifunktionsbediensystem ausgewählt werden, welche Informationen auf der Multifunktionsanzeige angezeigt werden sollen. In der DE 10 2005 003548 A1 wird der Oberbegriff des Anspruchs 1 offenbart.

Um die vielfältigen Informationen flexibel anzeigen zu können, werden z. B. frei programmierbare Displays eingesetzt, die häufig auch die Wiedergabe herkömmlicher mechanischer Instrumente übernehmen. In der DE 10 2006 032 118 A1 ist beispielsweise ein Kombiinstrument für ein Kraftfahrzeug beschrieben, welches ein Display umfasst, mit dem variabel die Geschwindigkeit des Kraftfahrzeugs, die Drehzahl des Motors des Kraftfahrzeugs, die Temperatur des Motors des Kraftfahrzeugs, die Tankfüllung und/oder die Zeit angezeigt werden können. Außerdem ist es möglich, Informationen eines Navigationssystems, eines Telefons, einer Musikanlage, eines Infotainmentsystems und/oder einer Klimaanlage anzuzeigen.

Zusätzlich zu dem Kombiinstrument wird vielfach eine Anzeigevorrichtung oberhalb der Mittelkonsole des Fahrzeugs angeordnet, über welche weitere Informationen angezeigt werden können. Diese Anzeigevorrichtung wird insbesondere als Multifunktionsanzeige und zur Darstellung einer geographischen Karte eines Navigationssystems verwendet. Eine solche Multifunktionsanzeige ist beispielsweise in der DE 199 41 956 A1 beschrieben.

Für die Anzeige von Information in einem Fahrzeug und für die Bedienung der vielfältigen Einrichtungen des Fahrzeugs ergeben sich sehr spezielle Anforderungen. Die Informationsaufnahme und die Bedienung erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, so dass er für die Informationsaufnahme nur sehr kurzzeitig den Blick vom Fahrgeschehen abwenden muss. Gleichermaßen sollte die Bedienung der Fahrzeugeinrichtungen so einfach und intuitiv wie möglich durchführbar sein, so dass der Fahrer die Einrichtungen auch während der Fahrt bedienen kann. Wird die Bedienung von einer Anzeige unterstützt oder geführt, sollte die Anzeige so erfolgen, dass der Fahrer für die Bedienung nur sehr kurz die Anzeige betrachten muss, um die Bedienung durchzuführen.

Der vorliegenden Erfindung liegt die Aufgabe zugrunde, eine Bedienvorrichtung, ein Fahrzeug und ein Verfahren der eingangs genannten Art bereitzustellen, mit denen Funktionseinrichtungen des Fahrzeugs einfach, intuitiv und schnell bedient werden können.

Diese Aufgabe wird erfindungsgemäß durch eine Bedienvorrichtung mit den Merkmalen des Anspruchs 1, ein Fahrzeug mit den Merkmalen des Anspruchs 4 und ein Verfahren mit den Merkmalen des Anspruchs 5 gelöst. Vorteilhafte Ausgestaltungen und Weiterbildungen ergeben sich aus den abhängigen Ansprüchen.

Die erfindungsgemäße Bedienvorrichtung ist dadurch gekennzeichnet, dass das längliche kapazitive Bedienelement in mehrere Abschnitte unterteilt ist, denen verschiedene Funktionseinrichtungen des Fahrzeugs zugeordnet sind. Ferner ist mit der Steuervorrichtung die Anzeigevorrichtung so ansteuerbar, dass bei einer kapazitiven Kopplung eines Betätigungsobjekts mit einem der Abschnitte des Bedienelements eine Vorschaudarstellung für die diesem Abschnitt zugeordnete Funktionseinrichtung des Fahrzeugs von der Anzeigevorrichtung dargestellt wird, wenn das Betätigungsobjekt für ein definiertes Zeitintervall bei dem Abschnitt verbleibt, und mehrere Menüeinträge für eine diesem Abschnitt zugeordnete Funktionseinrichtung des Fahrzeugs von der Anzeigevorrichtung dargestellt werden, wenn das Betätigungsobjekt eine Gleitbewegung oder Drehbewegung in eine definierte Richtung ausführt.

Bei der kapazitiven Kopplung eines Betätigungsobjekts mit dem Bedienelement wird die Kapazität eines Kondensators des Bedienelements durch das Betätigungsobjekt verändert. Durch das Betätigungsobjekt ergibt sich eine Ladungsverschiebung im Kondensator des Bedienelements, welche von einem Sensor des Bedienelements erfasst und einem bestimmten Abschnitt des Bedienelements zugeordnet werden kann. Bedienelemente, die durch eine kapazitive Kopplung mit einem Betätigungsobjekt betätigt werden, sind an sich bekannt. Bei dem Betätigungsobjekt handelt es sich insbesondere um die Fingerspitze eines Nutzers. Es können jedoch auch andere für eine kapazitive Kopplung geeignete Betätigungsobjekte verwendet werden.

Bei der erfindungsgemäßen Bedienvorrichtung ist die Anzeigevorrichtung von dem Bedienelement getrennt. Sie lässt sich im Fahrzeug somit auch dort einsetzen, wo die räumlichen Verhältnisse eine Anordnung einer berührungsempfindliche Oberfläche als Bedienelement auf der Anzeigefläche einer Anzeigevorrichtung erschweren. Die erfindungsgemäße Bedienvorrichtung kann somit insbesondere sogenannte Touchscreens ersetzen. Durch die kapazitive Kopplung des Betätigungselements mit dem kapazitiven Bedienelement ist jedoch vorteilhafterweise weiterhin eine sehr einfache und schnelle Betätigung des Bedienelements möglich.

Bei der erfindungsgemäßen Bedienvorrichtung sind ferner vorteilhafterweise zumindest zwei Bediengesten definiert. Bei der ersten Geste berührt der Nutzer zum Beispiel mit seiner Fingerspitze einen bestimmten Abschnitt des Bedienelements, woraufhin eine diesem Abschnitt zugeordnete Vorschaudarstellung angezeigt wird. Die Vorschaudarstellung wird insbesondere auch dann angezeigt, wenn das Betätigungsobjekt sich für ein bestimmtes Zeitintervall bei dem Abschnitt befindet, selbst wenn es sich relativ zu dem Bedienelement bewegt. Wenn allerdings die Gleitbewegung oder Drehbewegung in der definierten Richtung ausgeführt wird, werden statt der Vorschaudarstellung die Menüeinträge angezeigt. Der Nutzer kann somit schnell und intuitiv erfassen, welche weiteren Bedienvorgänge und Anzeigen mit der diesem Abschnitt zugeordneten Funktionseinrichtung ausgeführt werden können. Der Nutzer kann seine Fingerspitze von Abschnitt zu Abschnitt des Bedienelements bewegen und auf diese Weise schnell und intuitiv erfassen, welchen Funktionseinrichtungen des Fahrzeugs die entsprechenden Abschnitte zugeordnet sind.

Bei einer zweiten Betätigungsgeste führt der Nutzer eine Gleitbewegung oder eine Drehbewegung in eine definierte Richtung aus. Die definierte Richtung für die Gleitbewegung unterscheidet sich insbesondere von der Richtung der Längserstreckung des länglichen kapazitiven Bedienelements. Die Gleitbewegung unterscheidet sich somit von einer Bewegung von Abschnitt zu Abschnitt des Bedienelements. Die Gleitbewegung ist insbesondere senkrecht zu der Längserstreckung des Bedienelements. Die definierte Richtung für die Drehbewegung ist insbesondere ein Kreisbogen eines Kreises, dessen Drehachse mit der Achse des länglichen kapazitiven Bedienelements zusammenfällt. Die Drehachse ist somit parallel zu der Längserstreckung des länglichen Bedienelements. Wenn der Nutzer diese zweite Betätigungsgeste ausführt, werden mehrere Menüeinträge dargestellt, die zu dem Abschnitt gehören, bei welchem die Gleitbewegung oder Drehbewegung ausgeführt wird. Diesem Abschnitt ist wiederum eine Funktionseinrichtung des Fahrzeugs zugeordnet. Die Menüeinträge können insbesondere Favoriten eines Menüs enthalten, welches der entsprechenden Funktionseinrichtung zugeordnet sind. Auf diese Weise kann der Nutzer schnell und intuitiv auf bestimmte häufig benutzte Menüeinträge zugreifen. Insgesamt wird somit eine Betätigung von Funktionseinrichtungen des Fahrzeugs bereitgestellt, die einfach und schnell ausführbar ist und für den Nutzer intuitiv erfassbar ist.

Gemäß einer Ausgestaltung der erfindungsgemäßen Bedienvorrichtung weist die Anzeigevorrichtung eine Anzeigefläche auf, das längliche kapazitive Bedienelemente umfasst hingegen keine Anzeigefläche. Das Bedienkonzept der Bedienvorrichtung weicht somit von dem Konzept eines Touchscreens ab. Es entspricht dem eines Touchpads, das heißt einer berührungsempfindlichen Oberfläche, die abgesetzt von der Anzeigefläche angeordnet ist. Dennoch kann das kapazitive Bedienelement benachbart zu der Anzeigefläche angeordnet sein, so dass die Funktion der Abschnitte des Bedienelements so auf der Anzeigefläche dargestellt werden kann, dass ein Nutzer die Funktion auf der Anzeigefläche ablesen kann. Vorteilhafterweise können hierdurch die Funktionen der Abschnitte des Bedienelements verändert werden, ohne dass es erforderlich ist, das körperliche Bedienelement zu verändern. Die Funktionsänderung kann durch eine Anpassung der Software einer Steuervorrichtung für das Bedienelement und für die Anzeigefläche vorgenommen werden.

Das längliche kapazitive Bedienelement ist insbesondere unterhalb der Anzeigefläche der Anzeigevorrichtung angeordnet. In diesem Fall kann das Bedienelement zwar separat von der Anzeigevorrichtung ausgebildet sein. Dennoch wird eine räumliche Nähe des Bedienelements zu der Anzeigefläche hergestellt. Die Verbindung des Bedienelements mit der Anzeigefläche kann vorteilhafterweise in diesem Fall von dem Nutzer leicht und intuitiv hergestellt werden. Außerdem kann in diesem Fall die Bedienvorrichtung platzsparend in das Fahrzeug eingebaut werden.

Die Erfindung betrifft des Weiteren ein Fahrzeug mit der vorstehend beschriebenen Bedienvorrichtung. Das Fahrzeug weist in diesem Fall insbesondere zumindest zwei in Fahrtrichtung des Fahrzeugs hintereinander angeordnete Sitze auf. Die Anzeigevorrichtung ist beispielsweise auf der Rückseite des vorderen Sitzes angeordnet, so dass Anzeigen der Anzeigevorrichtung von einer Person wahrnehmbar sind, die auf dem hinteren Sitz sitzt. Auf solchen Rücksitzen eines Fahrzeugs sind häufig Infotainmenteinrichtungen untergebracht. Es hat sich jedoch herausgestellt, dass die Anzeigefläche solcher Infotainmentsysteme zu weit von einer Person auf dem Rücksitz entfernt ist, um sie als Touchscreen auszubilden. In diesem Fall kann das längliche kapazitive Bedienelement in Reichweite einer Person auf dem Rücksitz angeordnet werden, so dass eine Betätigung des Bedienelements erleichtert wird. Dennoch kann eine räumliche Nähe zu der Anzeigefläche hergestellt werden, damit der Nutzer einfach und intuitiv Anzeigen auf der Anzeigefläche den Abschnitten des Bedienelements zuordnen kann.

Bei dem erfindungsgemäßen Verfahren wird eine kapazitive Kopplung eines Betätigungsobjekts mit einem Abschnitt eines länglichen kapazitiven Bedienelements erfasst, bei der das Betätigungsobjekt für ein definiertes Zeitintervall bei einem Abschnitt verbleibt, woraufhin eine Vorschaudarstellung für eine diesem Abschnitt zugeordnete Funktionseinrichtung des Fahrzeugs von der Anzeigevorrichtung dargestellt ist. Wenn ferner eine kapazitive Kopplung des Betätigungsobjekts mit einem Abschnitt des länglichen kapazitiven Bedienelements erfasst wird, bei der das Betätigungsobjekt eine Gleitbewegung oder Drehbewegung in eine definierte Richtung ausführt, werden mehrere Menüeinträge für eine diesem Abschnitt zugeordnete Funktionseinrichtung des Fahrzeugs von der Anzeigevorrichtung dargestellt.

Das erfindungsgemäße Verfahren kann insbesondere von der vorstehend erläuterten erfindungsgemäßen Bedienvorrichtung ausgeführt werden. Es weist somit dieselben Vorteile auf wie die erfindungsgemäße Bedienvorrichtung.

Wenn gemäß einer Weiterbildung des erfindungsgemäßen Verfahrens keine kapazitive Kopplung mehr erfasst wird, verschwindet die Vorschaudarstellung oder die Darstellung der Menüeinträge und es wird wieder die Anzeige wiedergegeben, die vor dem Erfassen der kapazitiven Kopplung wiedergegeben wurde. Der Nutzer kann somit sehr schnell zu einer Vorschaudarstellung für Funktionseinrichtungen des Fahrzeugs gelangen oder die Darstellung bestimmter Menüeinträge, die insbesondere Favoriten umfassen, herbeiführen. Wenn jedoch keine Änderung der Anzeige bzw. keine Bedienung einer Funktionseinrichtung gewünscht ist, kann der Nutzer die ursprüngliche Anzeige wieder erzeugen, indem er einfach zum Beispiel seine Fingerspitze von dem kapazitiven Bedienelement wegbewegt und dadurch die kapazitive Kopplung beendet. Vorteilhafterweise muss der Nutzer in diesem Fall nicht durch eine gegebenenfalls komplexe Menüstruktur zu der ursprünglichen Anzeige zurücknavigieren.

Gemäß einer Weiterbildung des erfindungsgemäßen Verfahrens geht die Vorschaudarstellung in eine Darstellung für eine diesem Abschnitt zugeordnete Funktionseinrichtung über, wenn über die kapazitive Kopplung ein Antippen dieses Abschnitts erfasst wurde, wobei diese Darstellung auch dann verbleibt, wenn nach dem Antippen keine kapazitive Kopplung mehr erfasst wird. Wenn in diesem Fall keine kapazitive Kopplung mehr erfasst wird, bleibt die Anzeige bestehen und kehrt nicht wieder zu der ursprünglichen Anzeige zurück. Auf diese Weise kann zwischen den Anzeigen verschiedener Funktionseinrichtungen schnell und einfach gewechselt werden.

Bei einer weiteren Ausgestaltung des erfindungsgemäßen Verfahrens sind durch die Gleitbewegung oder die Drehbewegung die dargestellten Menüeinträge markierbar. Beispielsweise kann durch die Läge der Gleitbewegung oder der Drehbewegung in die hierfür definierte Richtung ein bestimmter Menüeintrag markiert werden. Ein solcher Menüeintrag wird dann ausgewählt, wenn das Betätigungsobjekt für ein definiertes Zeitintervall bei einer Position verbleibt, bei der ein Menüeintrag markiert ist. Bei einer Markierung eines Menüeintrags wird dieser nur gegenüber anderen Menüeinträgen hervorgehoben. Bei einer Auswahl eines Menüeintrags wird eine dem Menüeintrag zugeordnete Funktion ausgeführt. Beispielsweise wird eine Steuerbefehl an eine zugeordnete Funktionseinrichtung übertragen oder die Anzeige auf der Anzeigefläche verändert. Auch durch diese Ausgestaltung des erfindungsgemäßen Verfahrens wird eine einfache, schnelle und intuitive Bedienung der Funktionseinrichtungen des Fahrzeugs bereitgestellt.

Wenn bei der zuletzt erläuterten Ausgestaltung innerhalb eines definierten Zeitintervalls kein Menüeintrag ausgewählt wurde, verschwindet bei einer weiteren Ausgestaltung des erfindungsgemäßen Verfahrens die Darstellung der Menüeinträge und es wird wieder die Anzeige wiedergegeben, die vor dem Erfassen der kapazitiven Kopplung wiedergegeben wurde. Auch hierdurch wird erreicht, dass eine schnelle und intuitive Bedienung der Funktionseinrichtungen des Fahrzeugs möglich ist.

Gemäß einer weiteren Ausgestaltung des erfindungsgemäßen Verfahrens wird die Funktion der Abschnitte des länglichen kapazitiven Bedienelements benachbart zu den Abschnitten auf der Anzeigefläche angezeigt. Hierdurch kann dem Nutzer die Funktion der Abschnitte des Bedienelements angezeigt werden, ohne dass das Bedienelement selbst beschriftet sein muss. Außerdem können die Funktionen der Abschnitte des Bedienelements einfach und kostengünstig geändert werden, da nur eine Anpassung der Software erforderlich ist, das Bedienelement selbst hingegen unverändert bleiben kann.

Im Folgenden wird ein Ausführungsbeispiel der erfindungsgemäßen Bedienvorrichtung und des erfindungsgemäßen Verfahrens mit Bezug zu den Zeichnungen erläutert.
- Figur 1: zeigt die Anordnung von Teilen des Ausführungsbeispiels der Bedienvorrichtung in einem Ausführungsbeispiel eines Fahrzeugs,
- Figur 2: zeigt schematisch den Aufbau des Ausführungsbeispiels der erfindungsgemäßen Bedienvorrichtung und deren Kopplung mit anderen Einrichtungen des Fahrzeugs und
- Figuren 3 bis 10: veranschaulichen ein Ausführungsbeispiel des erfindungsgemäßen Verfahrens.

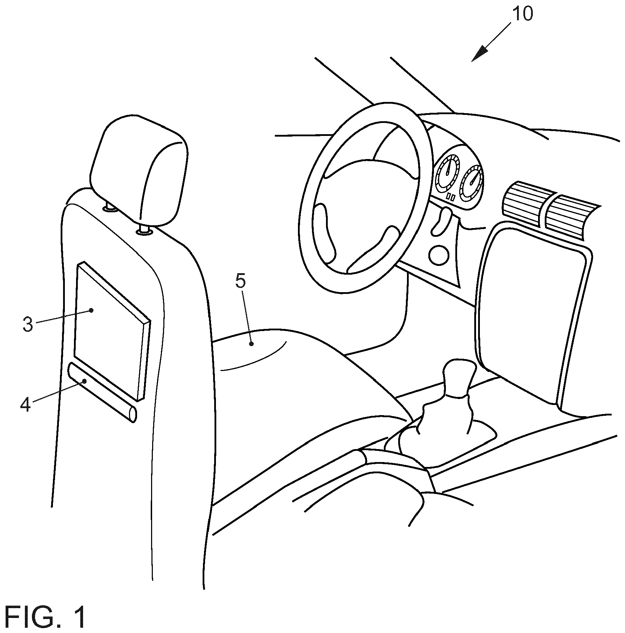

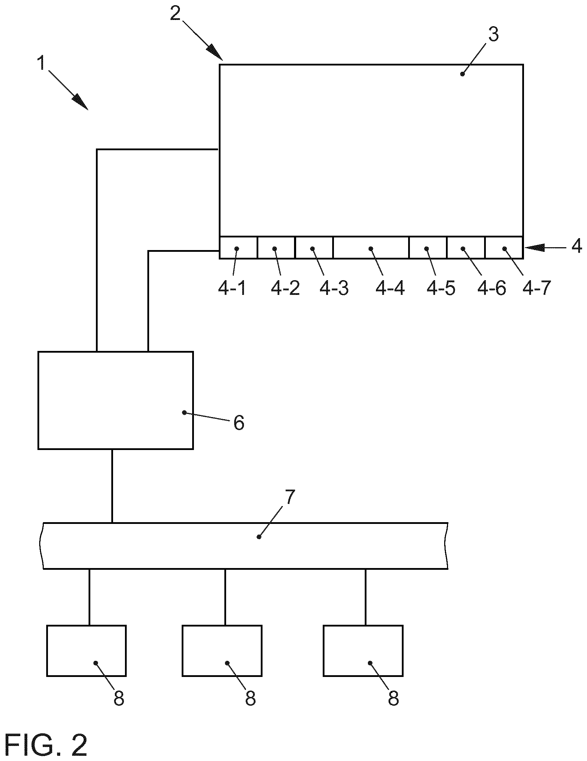

Zunächst wird der Aufbau des Ausführungsbeispiels der erfindungsgemäßen Bedienvorrichtung 1 mit Bezug zu den Figuren 1 und 2 erläutert:
Die Bedienvorrichtung 1 umfasst eine Anzeigevorrichtung 2 mit einer Anzeigefläche 3 an sich bekannter Bauart. Des Weiteren umfasst die Bedienvorrichtung 1 ein längliches kapazitives Bedienelement 4, welches in mehrere Abschnitte 4-1 bis 4-4 unterteilt ist.

Wie in Fig. 1 gezeigt, ist die Anzeigevorrichtung 2 so in die Rückseite eines Vordersitzes 5 des Fahrzeugs 10 eingebaut, dass ein Nutzer, welcher auf einem Rücksitz sitzt, der sich hinter dem Vordersitz 5 befindet, die Anzeigefläche 3 betrachten kann. Unterhalb der Anzeigefläche 3 ist das längliche kapazitive Bedienelement 4 angeordnet. Es befindet sich in Reichweite einer Person, die auf einem Rücksitz hinter dem Vordersitz 5 sitzt.

Das Bedienelement 4 ist separat von der Anzeigevorrichtung 2 ausgebildet. Es befindet sich jedoch benachbart zu der Anzeigevorrichtung 2. Es ist jedoch auch möglich, die Anzeigevorrichtung 2 und das Bedienelement 4 in einem Gehäuse zu integrieren.

Die Anzeigevorrichtung 2 und das kapazitive Bedienelement 4 sind mit einer Steuervorrichtung 6 gekoppelt. Mittels der Steuervorrichtung 6 sind Graphikdaten für die Anzeige auf der Anzeigefläche 3 erzeugbar. Außerdem ist mittels der Steuervorrichtung 6 die Position eines Betätigungsobjekts relativ zu den Abschnitten 4-1 bis 4-7 des Bedienelements 4 erfassbar, wenn zwischen dem Betätigungsobjekt und dem kapazitiven Bedienelement 4 eine kapazitive Kopplung hergestellt wird. Bei dem Betätigungsobjekt handelt es sich insbesondere um die Fingerspitze eines Nutzers, der auf dem Rücksitz hinter dem Vordersitz 5 sitzt. Befindet sich die Fingerspitze eines solchen Nutzers bei einem der Abschnitte 4-1 bis 4-7 des Bedienelements 4 oder unmittelbar davor, erfasst die Steuervorrichtung 6 durch kapazitive Kopplung des Bedienelements 4 mit der Fingerspitze, dass sich die Fingerspitze auf oder unmittelbar vor einem der Abschnitte 4-1 bis 4-7 befindet. Ferner erfasst die Steuervorrichtung 6 bei welchem der Abschnitte 4-1 bis 4-4 sich die Fingerspitze befindet. In Abhängigkeit von einer solchen kapazitiven Kopplung zwischen der Fingerspitze eines Nutzers und dem Bedienelement 4 kann die Steuervorrichtung 6 Graphikdaten für die Anzeige auf der Anzeigefläche 3 erzeugen, welche diese Anzeige verändern.

Des Weiteren ist die Steuervorrichtung 6 mit einem Datenbus 7 des Fahrzeugs 10 gekoppelt. Der Datenbus 7 ist wiederum mit Funktionseinrichtungen 8 des Fahrzeugs 10 verbunden, so dass die Steuervorrichtung 6 mit diesen Funktionseinrichtungen 8 Daten austauschen kann. Zum einen können von den Funktionseinrichtungen 8 über den Datenbus 7 Daten an die Steuervorrichtung 6 übertragen werden, welcher in Abhängigkeit von den übertragenen Daten Graphikdaten für die Anzeige auf der Anzeigefläche 3 erzeugt. Diese Anzeigen auf der Anzeigefläche 3 unterstützen den Nutzer bei der Bedienung der Funktionseinrichtungen 8. Zum anderen kann die Steuervorrichtung 6 in Abhängigkeit von Eingaben eines Nutzers über das Bedienelement 4 Steuersignale an die Funktionseinrichtungen 8 übertragen, um diese zu steuern.

Die Abschnitte 4-1 bis 4-7 sind dabei verschiedenen Funktionseinrichtungen 8 des Fahrzeugs 10 zugeordnet. Beispielsweise ist der Abschnitt 4-1 einem Navigationssystem zugeordnet, der Abschnitt 4-2 einer Telekommunikationseinrichtung, der Abschnitt 4-3 einer Musikwiedergabeeinrichtung, der Abschnitt 4-4 einem Verstärker einer Audioeinrichtung, der Abschnitt 4-5 einer Multimediaeinrichtung, der Abschnitt 4-6 Betriebseinrichtungen des Fahrzeugs 10 und der Abschnitt 4-7 einem Radio des Fahrzeugs 10 zugeordnet.

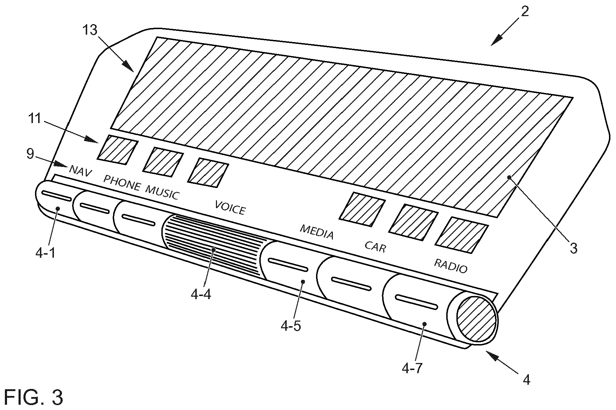

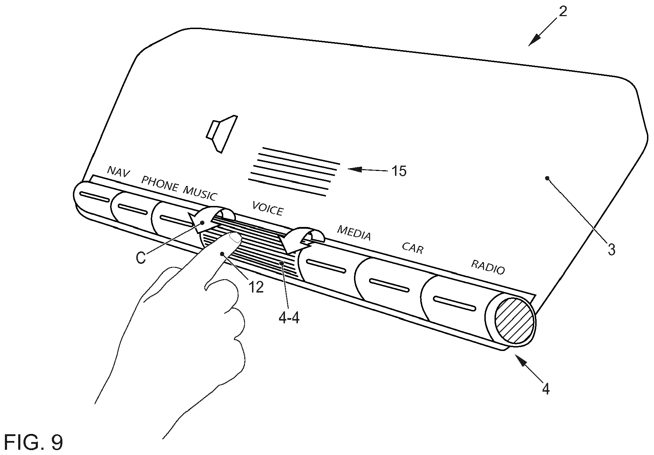

Im Folgenden wird mit Bezug zu den Figuren 3 bis 10 ein Ausführungsbeispiel des erfindungsgemäßen Verfahrens erläutert, welches mittels der vorstehend beschriebenen Bedienvorrichtung 1 ausführbar ist:
In Figur 3 ist eine Ausgangsanzeige gezeigt, die mittels der Anzeigevorrichtung 2 wiedergegeben wird. In unteren Bereich der Anzeigefläche 3, das heißt oberhalb des länglichen kapazitiven Bedienelements 4 wird eine Leiste 9 dargestellt, bei der jeweils oberhalb den Abschnitten 4-1 bis 4-7 des Bedienelements 4 Beschriftungen für diese Abschnitte 4-1 bis 4-7 wiedergegeben werden. Anhand der Darstellung in der Leiste 9 kann der Nutzer somit die Funktion der Abschnitte 4-1 bis 4-7 ablesen. Oberhalb der Leiste 9 weist die Anzeigefläche 3 einen Hauptanzeigebereich 13 und gegebenenfalls eine Leiste 11 mit einem sekundären Menü auf.

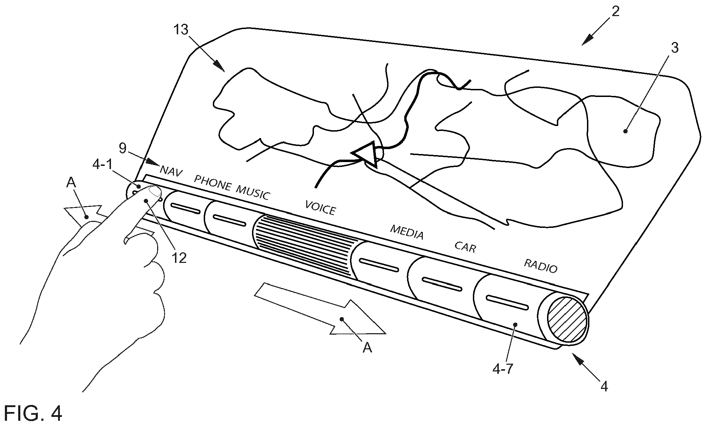

Wenn der Nutzer nun, wie in Figur 4 gezeigt, seine Fingerspitze 12 an das Bedienelement 4 annähert und schließlich das Bedienelement 4 bei einem der Abschnitte 4-1 bis 4-7 berührt, erfasst die Steuervorrichtung 6 eine kapazitive Kopplung der Fingerspitze 12 mit dem Bedienelement 4. Ferner erfasst die Steuervorrichtung 6 bei welchem der Abschnitte 4-1 bis 4-4 die Fingerspitze 12 das Bedienelement 4 berührt. Die Steuervorrichtung 6 erzeugt daraufhin Graphikdaten für die Anzeige auf der Anzeigefläche 3, die eine Vorschaudarstellung für die dem Abschnitt 4-1 zugeordnete Funktionseinrichtung 8 des Fahrzeugs 10 umfasst.

Bei einer Situation, wie sie in Figur 4 dargestellt ist, berührt der Nutzer mit seiner Fingerspitze den Abschnitt 4-1, welcher dem Navigationssystem des Fahrzeugs 10 zugeordnet ist. Entsprechend wird im Bereich 13 der Anzeigefläche 3 eine geographische Karte als Vorschaudarstellung wiedergegeben.

Der Nutzer kann nun seine Fingerspitze 12 in Richtung der Pfeile A über das Bedienelement 4 bewegen. Dabei kommt es zu einem Wechsel der Berührposition der Fingerspitze 12 von einem Abschnitt 4-1 zu einem anderen Abschnitt 4-2. Wenn die Fingerspitze 12 dabei für ein vorab definiertes Zeitintervall bei einem der Abschnitte 4-1 bis 4-7 verweilt, verbleibt oder nur auf diesem bewegt wird, wird die Vorschaudarstellung für die Funktionseinrichtung 8 dieses Abschnitts 4-1 bis 4-7 angezeigt. Die Vorschaudarstellung wird somit angezeigt, sobald die Fingerspitze 12 für ein definiertes Zeitintervall bei einem der Abschnitte 4-1 bis 4-7 mit dem Bedienelement 4 kapazitiv gekoppelt war. Die Länge des Zeitintervalls ist in einem Speicher der Steuervorrichtung 6 gespeichert. Das Zeitintervall kann sehr kurz sein, so dass unmittelbar nach der kapazitiven Kopplung zwischen einem der Abschnitte 4-1 bis 4-7 des Bedienelements 4 und der Fingerspitze 12 die Vorschaudarstellung angezeigt wird.

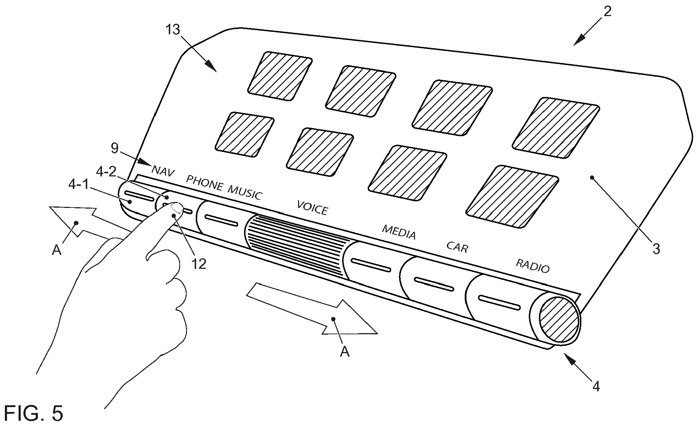

In Figur 5 ist ein Zustand gezeigt, bei dem der Nutzer seine Fingerspitze 12 von dem Abschnitt 4-1 zu dem Abschnitt 4-2 bewegt hat. Der Abschnitt 4-2 ist der Telekommunikationseinrichtung des Fahrzeugs 10 zugeordnet. Entsprechend verändert die Steuervorrichtung 6 die Graphikdaten für die Anzeige auf der Anzeigefläche 3, so dass nicht mehr die geographische Karte angezeigt wird, sondern eine Liste mit einer Teilmenge der Kontakte der Telekommunikationseinrichtung.

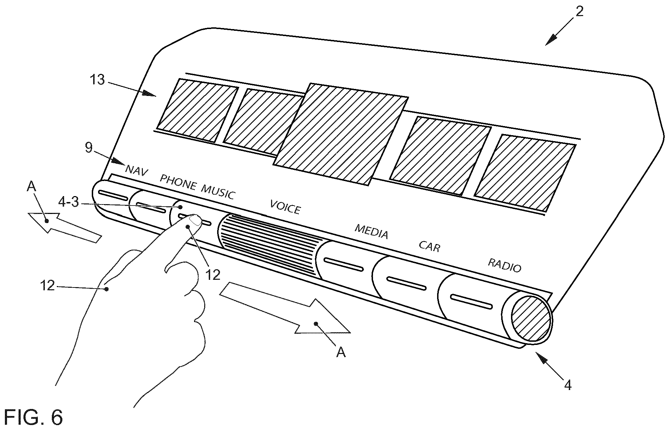

Wenn der Nutzer seine Fingerspitze 12 weiter zu dem Abschnitt 4-3 des Bedienelements 4 bewegt, wird wie in Figur 6 gezeigt, eine andere Liste mit einer Teilmenge der Musikstücke der Musikwiedergabeeinrichtung angezeigt. Auch hierbei handelt es sich nur um eine Vorschaudarstellung.

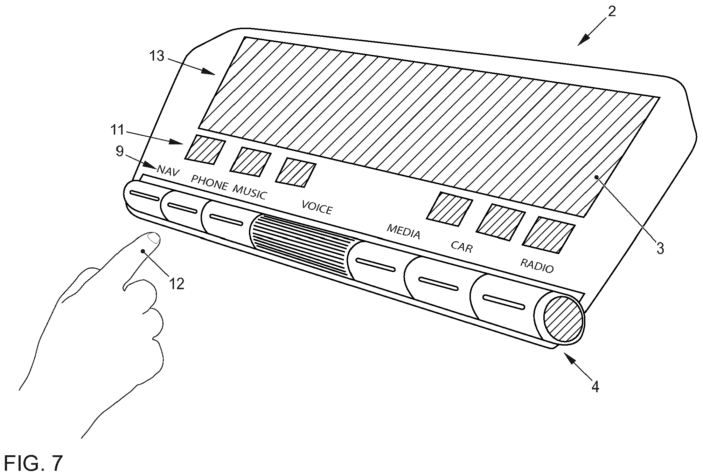

Wenn der Nutzer nun den Kontakt der Fingerspitze 12 mit dem Bedienelement 4 löst, so dass von der Steuervorrichtung 6 keine kapazitive Kopplung mehr erfasst wird, kehrt die Anzeige auf der Anzeigefläche 3 gesteuert von der Steuervorrichtung 6 wieder in die ursprüngliche Anzeige zurück, welche vor der kapazitiven Kopplung der Fingerspitze 12 mit dem Bedienelement 4 angezeigt wurde, wie es in Figur 7 angezeigt ist. Die Darstellung auf der Anzeigefläche 3 gemäß Figur 7 entspricht dabei der Anzeige wie sie mit Bezug zu Figur 3 erläutert wurde.

Wird in einem anderen Fall bei einer aktivierten Routenführung des Navigationssystems des Fahrzeugs 10 eine geographische Karte auf der Anzeigefläche 3 angezeigt und wird dann der Abschnitt 4-5 des Bedienelements 4 mit der Fingerspitze 12 berührt, wird das derzeit spielende Musikstück angezeigt. Entfernt der Nutzer dann seine Fingerspitze 12 wieder von dem Abschnitt 4-5, so dass keine kapazitive Kopplung mit dem Bedienelement 4 mehr besteht, wird wieder die geographische Karte des Navigationssystems angezeigt.

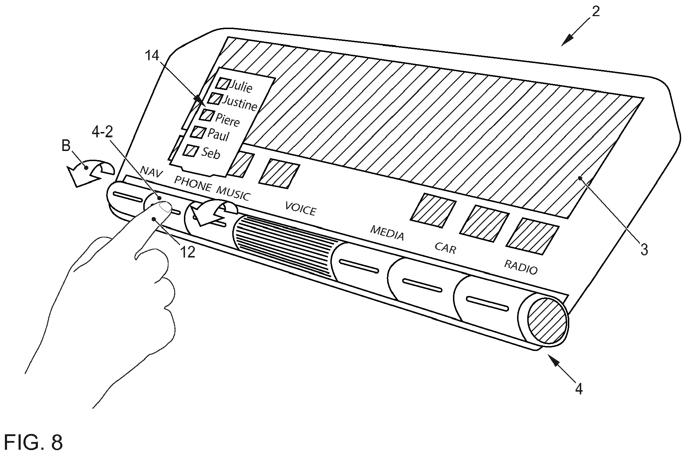

Wenn eine kapazitive Kopplung zwischen der Fingerspitze 12 und einem der Abschnitte 4-1 bis 4-7 des Bedienelements 4 besteht, kann der Nutzer anstatt der Bewegung in Richtung der Pfeile A noch eine weitere Bediengeste ausführen, nämlich eine Gleit- oder Drehbewegung in Richtung des Pfeils B, wie es in Figur 8 gezeigt ist. Die Fingerspitze 12 des Nutzers befindet sich in diesem Fall auf dem Abschnitt 4-2 des Bedienelements 4. Der Umfang des zylindrischen Bedienelements 4 beschreibt einen Kreis. Eine Gleit- oder Drehbewegung in Richtung des Pfeils B ist somit eine Bewegung auf diesen Kreis um die Achse des Bedienelements 4. Wird aufgrund der kapazitiven Kopplung von der Steuervorrichtung 6 eine solche Gleit- oder Drehbewegung detektiert, verändert die Steuervorrichtung 6 die Graphikdaten für die Anzeige auf der Anzeigefläche 3 so, dass ein Menü 14 mit mehreren Menüeinträgen für eine diesem Abschnitt 4-2 zugeordnete Funktionseinrichtung 8 des Fahrzeugs 10 von der Anzeigevorrichtung 2 dargestellt wird. In dem in Figur 8 gezeigten Beispiel wird eine Liste mit Kontakten von dem Menü 14 dargestellt. Bei diesen Kontakten kann es sich beispielsweise um sogenannte Favoriten handeln, die im Voraus für diese Darstellung definiert wurden.

Durch die Gleit- oder Drehbewegung in Richtung des Pfeils B kann der Nutzer außerdem einen Menüeintrag des Menüs 14, das heißt bei dem in Figur 8 gezeigten Fall einen Kontakt, markieren. Wenn der Nutzer dann mit seiner Fingerspitze 12 für ein definiertes Zeitintervall bei der Position verweilt, bei der ein Menüeintrag markiert ist, wird dieser markierte Menüeintrag ausgewählt. Bei einer solchen Auswahl erzeugt die Steuervorrichtung 6 ein Steuersignal für die Funktionseinrichtung 8. Bei dem in Figur 8 gezeigten Fall wird ein Anruf an den ausgewählten Kontakt initiiert. Wenn allerdings keiner der Menüeinträge des Menüs 14 innerhalb des Zeitintervalls ausgewählt wird, verschwindet die Anzeige des Menüs 14 wieder und es wird wieder die Anzeige wiedergegeben, die vor dem Erfassen der kapazitiven Kopplung wiedergegeben wurde.

Auch anderen Abschnitten 4-1 bis 4-7 kann ein Menü 14 mit Favoriten zugeordnet sein, welches angezeigt wird, wenn der Nutzer mit seiner Fingerspitze 12 eine Gleit- oder Drehbewegung in Richtung des Pfeils B ausführt. Beispielsweise können bei einer solchen Bediengeste beim Abschnitt 4-1 bevorzugte Ziele für das Navigationssystem angezeigt werden, bei dem Abschnitt 4-5 bevorzugte Medien angezeigt werden und beim Abschnitt 4-7 bevorzugte Radiosender.

Wenn der Nutzer den Abschnitt 4-4 mit einer Fingerspitze 12 berührt und eine Gleit- oder Drehbewegung in Richtung des Pfeils C ausführt, wird die von dem Verstärker erzeugte Lautstärke, welche über die Lautsprecher im Innenraum des Fahrzeugs 10 ausgegeben wird, angepasst. Zur Visualisierung der Lautstärkeanpassung wird auf der Anzeigefläche 3 ein entsprechendes Anzeigeelement 15 angezeigt.

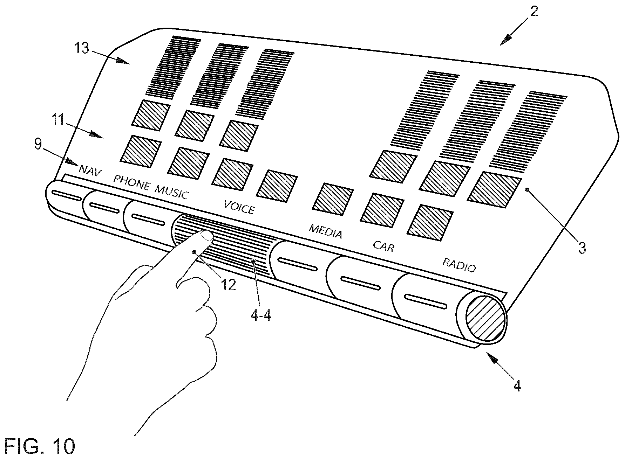

Des Weiteren kann bei dem erfindungsgemäßen Verfahren ein kurzes Antippen eines Abschnitts 4-1 bis 4-7 von der Steuervorrichtung 6 erfasst werden. Durch ein solches Antippen wird die dem Abschnitt 4-1 bis 4-7 zugeordnete Funktionseinrichtung für eine weitere Interaktion ausgewählt. In diesem Fall kehrt die Darstellung auf der Anzeigefläche 3 nicht mehr in die ursprüngliche Darstellung zurück, auch wenn die kapazitive Kopplung der Fingerspitze 12 mit dem Bedienelement 4 nicht mehr besteht. Die Vorschaudarstellung geht somit in eine permanente Darstellung über. Die weitere Interaktion kann dann über andere Bedienelemente erfolgen. Auf der Anzeigefläche 3 werden dann entsprechende Darstellungen für die weitere Bedienung wiedergegeben. In Figur 10 ist beispielsweise gezeigt, wie der Nutzer mit seiner Fingerspitze 12 kurz den Abschnitt 4-4 antippt, um anschließend weitere Eingaben zu den Klangeinstellungen des Verstärkers für die Audioausgabe zu tätigen.

### BEZUGSZEICHENLISTE

- 1: Bedienvorrichtung
- 2: Anzeigevorrichtung
- 3: Anzeigefläche
- 4: Bedienelement
- 4-1 bis 4-7: Abschnitte des Bedienelements 4
- 5: Vordersitz
- 6: Steuervorrichtung
- 7: Datenbus
- 8: Funktionseinrichtungen
- 9: Leiste der Anzeigefläche 3
- 10: Fahrzeug
- 11: sekundäres Menü auf der Anzeigefläche 3
- 12: Fingerspitze eines Nutzers
- 13: Bereich auf der Anzeigefläche 3
- 14: Menü
- 15: graphisches Element

## Patentansprüche

1. Bedienvorrichtung (1) in einem Fahrzeug (10) mit einer Anzeigevorrichtung (2), einem länglichen kapazitiven Bedienelement (4) und einer Steuervorrichtung (6), die mit der Anzeigevorrichtung (2) und dem länglichen kapazitiven Bedienelement (4) gekoppelt ist, wobei das längliche kapazitive Bedienelement (4) in mehrere Abschnitte (4-1 bis 4-7) unterteilt ist, denen verschiedene Funktionseinrichtungen (8) des Fahrzeugs (10) zugeordnet sind, und mit der Steuervorrichtung (6) die Anzeigevorrichtung (2) so ansteuerbar ist, wobei bei einer kapazitiven Kopplung eines Betätigungsobjekts (12) mit einem der Abschnitte (4-1 bis 4-7) des Bedienelementes (4) eine Vorschaudarstellung für die diesem Abschnitt (4-1) zugeordnete Funktionseinrichtung (8) des Fahrzeugs (10) von der Anzeigevorrichtung (2) dargestellt wird, wenn das Betätigungsobjekt (12) für ein definiertes Zeitintervall bei dem Abschnitt (4-1 bis 4-7) verbleibt, **dadurch gekennzeichnet, dass** mehrere Menüeinträge für eine diesem Abschnitt (4-1) zugeordnete Funktionseinrichtung (8) des Fahrzeugs (10) von der Anzeigevorrichtung (2) dargestellt werden, wenn das Betätigungsobjekt (12) eine Gleitbewegung oder Drehbewegung in eine definierte Richtung ausführt.

2. Bedienvorrichtung (1) nach Anspruch 1,
**dadurch gekennzeichnet,**
**dass** die Anzeigevorrichtung (2) eine Anzeigefläche (3) aufweist, das längliche kapazitive Bedienelement (4) hingegen keine Anzeigefläche umfasst.

3. Bedienvorrichtung (1) nach Anspruch 1 oder 2,
**dadurch gekennzeichnet,**
**dass** das längliche kapazitive Bedienelement (4) unterhalb der Anzeigefläche (3) der Anzeigevorrichtung (2) angeordnet ist.

4. Fahrzeug (10) mit einer Bedienvorrichtung (1) nach einem der Ansprüche 1 bis 3,
wobei das Fahrzeug (10) zumindest zwei in Fahrtrichtung hintereinander angeordnete Sitze (5) aufweist und die Anzeigevorrichtung (2) auf der Rückseite des vorderen Sitzes (5) angeordnet ist, so dass Anzeigen der Anzeigevorrichtung (2) von einer Person wahrnehmbar sind, die auf dem hinteren Sitz sitzt.

5. Verfahren zum Bedienen von Funktionseinrichtungen (8) eines Fahrzeugs (10), bei dem
- eine kapazitive Kopplung eines Betätigungsobjekts (12) mit einem Abschnitt (4-1 bis 4-7) eines länglichen kapazitiven Bedienelements (4) erfasst wird, bei der das Betätigungsobjekt (12) für ein definiertes Zeitintervall bei dem Abschnitt (4-1 bis 4-7) verbleibt, woraufhin eine Vorschaudarstellung für eine diesem Abschnitt (4-1) zugeordnete Funktionseinrichtung (8) des Fahrzeugs (10) von der Anzeigevorrichtung (2) dargestellt wird, und
- eine kapazitive Kopplung des Betätigungsobjekts (12) mit einem Abschnitt (4-1 bis 4-7) des länglichen kapazitiven Bedienelements (4) erfasst wird, bei der das Betätigungsobjekt (12) eine Gleitbewegung oder Drehbewegung in eine definierte Richtung (B) ausführt, woraufhin mehrere Menüeinträge für eine diesem Abschnitt (4-1) zugeordnete Funktionseinrichtung (8) des Fahrzeugs (10) von der Anzeigevorrichtung (2) dargestellt werden.

6. Verfahren nach Anspruch 5,
**dadurch gekennzeichnet,**
**dass** die Vorschaudarstellung oder die Darstellung der Menüeinträge verschwindet und wieder die Anzeige wiedergegeben wird, die vor dem Erfassen der kapazitiven Kopplung wiedergegeben wurde, wenn keine kapazitive Kopplung mehr erfasst wird.

7. Verfahren nach Anspruch 5 oder 6,
**dadurch gekennzeichnet,**
**dass** die Vorschaudarstellung in eine Darstellung für eine diesem Abschnitt (4-1) zugeordnete Funktionseinrichtung (8) übergeht, wenn über die kapazitive Kopplung ein Antippen dieses Abschnitts (4-1 bis 4-7) erfasst wurde, wobei diese Darstellung auch dann verbleibt, wenn nach dem Antippen keine kapazitive Kopplung mehr erfasst wird.

8. Verfahren nach einem der Ansprüche 5 bis 7,
**dadurch gekennzeichnet,**
**dass** durch die Gleitbewegung oder Drehbewegung die dargstellten Menüeinträge markierbar sind und dass ein markierter Menüeintrag ausgewählt wird, wenn das Betätigungsobjekt (12) für ein definiertes Zeitintervall bei einer Position verweilt, bei der ein Menüeintrag markiert ist.

9. Verfahren nach Anspruch 8,
**dadurch gekennzeichnet,**
**dass** die Darstellung der Menüeinträge verschwindet und wieder die Anzeige wiedergegeben wird, die vor dem Erfassen der kapazitiven Kopplung wiedergegeben wurde, wenn innerhalb eines definierten Zeitintervalls kein Menüeintrag ausgewählt wurde.

10. Verfahren nach einem der Ansprüche 5 bis 9,
**dadurch gekennzeichnet,**
**dass** die Funktion der Abschnitte (4-1 bis 4-7) des länglichen kapazitiven Bedienelements (4) benachbart zu den Abschnitten (4-1 bis 4-7) auf der Anzeigefläche (3) angezeigt wird.

## Claims

1. Operating apparatus (1) in a vehicle (10), comprising a display apparatus (2), an elongate capacitive operating element (4) and a control apparatus (6) which is coupled to the display apparatus (2) and the elongate capacitive operating element (4), wherein the elongate capacitive operating element (4) is subdivided into a plurality of sections (4-1 to 4-7) which are assigned different functional devices (8) of the vehicle (10) and the display apparatus (2) is actuatable by means of the control apparatus (6) in this way, wherein, in the case of capacitive coupling of an actuating object (12) with one of the sections (4-1 to 4-7) of the operating element (4), a preview for the functional device (8) of the vehicle (10) assigned to this section (4-1) is presented by the display apparatus (2) when the actuating object (12) remains at the section (4-1 to 4-7) for a defined time interval, **characterized in that** a plurality of menu entries for a functional device (8) of the vehicle (10) that is assigned to this section (4-1) are presented by the display apparatus (2) if the actuating object (12) carries out a sliding movement or rotating movement in a defined direction.

2. Operating apparatus (1) according to Claim 1,
**characterized**
**in that** the display apparatus (2) has a display area (3) while, by contrast, the elongate capacitive operating element (4) does not comprise a display area.

3. Operating apparatus (1) according to Claim 1 or 2,
**characterized**
**in that** the elongate capacitive operating element (4) is arranged below the display area (3) of the display apparatus (2).

4. Vehicle (10) comprising an operating apparatus (1) according to any one of Claims 1 to 3,
wherein the vehicle (10) has at least two seats (5) that are arranged in succession in the direction of travel and the display apparatus (2) is arranged on the rear side of the front seat (5) such that displays of the display apparatus (2) are perceivable by a person who is sitting on the rear seat.

5. Method for operating functional devices (8) of a vehicle (10), wherein
- capacitive coupling of an actuating object (12) with a section (4-1 to 4-7) of an elongate capacitive operating element (4) is captured, in which the actuating object (12) remains at the section (4-1 to 4-7) for a defined time interval, whereupon a preview for a functional device (8) of the vehicle (10) that is assigned to this section (4-1) is presented by the display apparatus (2), and
- capacitive coupling of an actuating object (12) with a section (4-1 to 4-7) of the elongate capacitive operating element (4) is captured, in which the actuating object (12) carries out a sliding movement or a rotating movement in a defined direction (B), whereupon a plurality of menu entries for a functional device (8) of the vehicle (10) that is assigned to this section (4-1) are presented by the display apparatus (2).

6. Method according to Claim 5,
**characterized**
**in that** the preview or the presentation of the menu entries disappears and the display which was reproduced prior to capturing the capacitive coupling is reproduced again once no capacitive coupling is captured anymore.

7. Method according to Claim 5 or 6,
**characterized**
**in that** the preview is converted into a presentation for a functional device (8) that is assigned to this section (4-1) if a tap on this section (4-1 to 4-7) was captured by way of the capacitive coupling, with this presentation also remaining if no capacitive coupling is captured anymore after the tap.

8. Method according to any one of Claims 5 to 7,
**characterized**
**in that** the presented menu entries are markable by the sliding movement or the rotating movement and in that a marked menu entry is selected if the actuating object (12) remains in a position in which a menu entry is marked for a defined time interval.

9. Method according to Claim 8,
**characterized**
**in that** the presentation of the menu entries disappears and the display which was reproduced prior to capturing the capacitive coupling is reproduced again if no menu entry was selected within a defined time interval.

10. Method according to any one of Claims 5 to 9,
**characterized**
**in that** the function of the sections (4-1 to 4-7) of the elongate capacitive operating element (4) is displayed next to the sections (4-1 to 4-7) on the display area (3).

## Revendications

1. Dispositif de commande (1) dans un véhicule (10) avec un dispositif d'affichage (2), un élément de commande capacitif allongé (4) et un dispositif de commande (6), qui est couplé au dispositif d'affichage (2) et à l'élément de commande capacitif allongé (4), dans lequel l'élément de commande capacitif allongé (4) est divisé en plusieurs parties (4-1 à 4-7), auxquelles différents systèmes de fonctionnement (8) du véhicule (10) sont associés, et le dispositif d'affichage (2) peut être commandé avec le dispositif de commande (6), dans lequel, lors d'un couplage capacitif d'un objet d'actionnement (12) avec une des parties (4-1 à 4-7) de l'élément de commande (4), une représentation de présentation pour le système de fonctionnement (8) du véhicule (10) associé à cette partie (4-1) est produite par le dispositif d'affichage (2), lorsque l'objet d'actionnement (12) reste pendant un intervalle de temps défini près de la partie (4-1 à 4-7), **caractérisé en ce que** plusieurs entrées de menu pour un système de fonctionnement (8) du véhicule (10) associé à cette partie (4-1 à 4-7) sont représentées par le dispositif d'affichage (2), lorsque l'objet d'actionnement (12) effectue un mouvement de glissement ou un mouvement de rotation dans une direction définie.

2. Dispositif de commande (1) selon la revendication 1, **caractérisé en ce que** le dispositif d'affichage (2) présente une surface d'affichage (3), mais l'élément de commande capacitif allongé (4) ne présente au contraire aucune surface d'affichage.

3. Dispositif de commande (1) selon la revendication 1 ou 2, **caractérisé en ce que** l'élément de commande capacitif allongé (4) est disposé en dessous de la surface d'affichage (3) du dispositif d'affichage (2).

4. Véhicule (10) doté d'un dispositif de commande (1) selon l'une quelconque des revendications 1 à 3, dans lequel le véhicule (10) présente au moins deux sièges (5) disposés l'un derrière l'autre dans la direction de marche et le dispositif d'affichage (2) est agencé sur le dossier du siège avant (5), de telle manière que des messages du dispositif d'affichage (2) puissent être vus par une personne assise sur le siège arrière.

5. Procédé de commande de systèmes de fonctionnement (8) d'un véhicule (10), dans lequel
- on détecte un couplage capacitif d'un objet d'actionnement (12) avec une partie (4-1 à 4-7) d'un élément de commande capacitif allongé (4), lors duquel l'objet d'actionnement (12) reste pendant un intervalle de temps défini près de la partie (4-1 à 4-7), à la suite duquel une représentation de présentation pour un système de fonctionnement (8) du véhicule (10) associé à cette partie (4-1) est produite par le dispositif d'affichage (2), et
- on détecte un couplage capacitif de l'objet d'actionnement (12) avec une partie (4-1 à 4-7) de l'élément de commande capacitif allongé (4), lors duquel l'objet d'actionnement (12) effectue un mouvement de glissement ou un mouvement de rotation dans une direction définie (B), à la suite duquel plusieurs entrées de menu pour un système de fonctionnement (8) du véhicule (10) associé à cette partie (4-1) sont représentées par le dispositif d'affichage (2).

6. Procédé selon la revendication 5, **caractérisé en ce que** la représentation de présentation ou la représentation des entrées de menu disparaît et il apparaît de nouveau l'écran qui avait été présenté avant la détection du couplage capacitif, lorsque plus aucun couplage capacitif n'est détecté.

7. Procédé selon la revendication 5 ou 6, **caractérisé en ce que** la représentation de présentation se transforme en une représentation pour un système de fonctionnement (8) associé à cette partie (4-1), lorsque l'on a détecté par le couplage capacitif un appel de cette partie (4-1), dans lequel cette représentation subsiste également lorsqu'aucun couplage capacitif n'est plus détecté après l'appel.

8. Procédé selon une des revendications 5 à 7, **caractérisé en ce que** les entrées de menu représentées peuvent être marquées par le mouvement de glissement ou le mouvement de rotation et **en ce que** l'on sélectionne une entrée de menu marquée, lorsque l'objet d'actionnement (12) reste pendant un intervalle de temps défini dans la position, dans laquelle une entrée de menu est marquée.

9. Procédé selon la revendication 8, **caractérisé en ce que** la représentation des entrées de menu disparaît et il apparaît de nouveau l'écran qui avait été présenté avant la détection du couplage capacitif, lorsqu'aucune entrée de menu n'est sélectionnée à l'intérieur d'un intervalle de temps défini.

10. Procédé selon l'une quelconque des revendications 5 à 9, **caractérisé en ce que** le fonctionnement des parties (4-1 à 4-7) de l'élément de commande capacitif allongé (4) est affiché sur la surface d'affichage (3) au voisinage des parties (4-1 à 4-7).
